# EUROPÄISCHE PATENTSCHRIFT

(11) **EP 1 283 951 B1**
(45) Veröffentlichungstag und Bekanntmachung des Hinweises auf die Patenterteilung: **02.11.2005**
(21) Anmeldenummer: 01931401.2
(22) Anmeldetag: 31.03.2001
(51) Int. Cl.: F02D 41/40

(54) **VERFAHREN ZUM EINSTELLEN VON ZYLINDERSPEZIFISCHEN EINSPRITZMENGENPROFILEN AN EINER BRENNKRAFTMASCHINE**
METHOD FOR ADJUSTING CYLINDER-SPECIFIC INJECTION QUANTITY PROFILES IN AN INTERNAL COMBUSTION ENGINE
PROCEDE POUR AJUSTER DES PROFILS DE QUANTITES D'INJECTION SPECIFIQUES A UN CYLINDRE DANS UN MOTEUR A COMBUSTION INTERNE

(30) Priorität: 11.05.2000 DE 10022952
(43) Veröffentlichungstag der Anmeldung: 19.02.2003
(73) Patentinhaber: ROBERT BOSCH GMBH, 70442 Stuttgart (DE)
(72) Erfinder: RUEGER, Johannes-Jörg, 71665 Vaihingen/Enz (DE); SAMUELSEN, Dirk, 71636 Ludwigsburg (DE); FEHRMANN, Ruediger, 71229 Leonberg (DE); SCHULZ, Udo, 71665 Vaihingen/Enz (DE)
(86) Internationale Anmeldenummer: PCT/DE2001/001277
(87) Internationale Veröffentlichungsnummer: WO 2001/086132

(56) Entgegenhaltungen:
- EP-A- 0 894 965
- EP-A- 1 026 384
- DE-A- 19 855 939
- DE-C- 19 700 738
- US-A- 5 131 371
- US-A- 5 680 842

## Beschreibung

Die Erfindung betrifft ein Verfahren zum Einstellen von zylinderspezifischen Einspritzmengenprofilen an einer Brennkraftmaschine mit den Verfahrensschritten entsprechend dem einleitenden Teil des Anspruchs 1.

### Stand der Technik

Bekannte Einspritzsysteme weisen für jeden Zylinder einer Brennkraftmaschine eine separate Einspritzeinheit zur Zuführung von Kraftstoff in die Zylinder auf. Der Kraftstoff wird während eines Ansteuerintervalls (Ansteuerdauer beziehungsweise Einspritzdauer) in die.Zylinder der Brennkraftmaschine eingespritzt, wobei der Intervallbeginn (Ansteuerbeginn beziehungsweise Einspritzbeginn) und die Länge des Ansteuerintervalls für alle Zylinder übereinstimmen, das heißt gleich sind. Hierbei kann es insbesondere aufgrund von Ungenauigkeiten zwischen den jeweiligen zylinderspezifischen Einspritzeinheiten zu einer Streuung zwischen den während eines Steuerintervalls in die Zylinder der Brennkraftmaschine zugeführten Einspritzmengen an Kraftstoff kommen. Derartige Streuungen zwischen den zugeführten Einspritzmengen führen zu Drehmomentschwankungen und ferner zu Drehzahlschwankungen beim Betreiben der Brennkraftmaschine. Zur Herabsetzung derartiger nachteilhafterweise auftretender Drehzahlschwankungen ist eine Mengenausgleichsregelung (MAR) beziehungsweise eine Laufruheregelung (LRR) vorgesehen, mittels welchen ein Drehzahlsignal während des Betreibens der Brennkraftmaschine aufgenommen und analysiert werden. Die Mengenausgleichsregelung ist geeignet, einen quantitativen Zusammenhang zwischen einer eventuell festgestellten Drehzahlschwankung und einer Streuung von den einzelnen Zylindern der Brennkraftmaschine zugeführten Einspritzmengen an Kraftstoff zu bilden. Es wird somit mittels der Mengenausgleichsregelung von einem Drehzahlsignal auf Differenzen zwischen den zylinderspezifischen Drehmomenten beziehungsweise Einspritzmengen geschlossen. Zur Korrektur der zueinander unterschiedlichen zylinderspezifischen Drehmomente beziehungsweise Einspritzmengen leitet die Mengenausgleichsregelung eine Veränderung des Ansteuerintervalls und somit der Ansteuerdauer ein, um die festgestellte Streuung zwischen den zylinderspezifischen Drehmomenten beziehungsweise Einspritzmengen an Kraftstoff auszugleichen. Hierzu werden die den einzelnen Zylindern entsprechenden, unterschiedlich großen Drehmomente beziehungsweise Einspritzmengen jeweils auf einen Durchschnittswert beziehungsweise Mittelwert mittels der Mengenausgleichsregelung geregelt. Da es sich bei Feststellung einer Streuung der zylinderspezifischen Drehmomente beziehungsweise Einspritzmengen um eine Relativinformation und nicht um eine Absolutinformation handelt, ist eine Regelung des jeweiligen Drehmoments beziehungsweise der jeweiligen Einspritzmenge nicht auf eine tatsächlich gewünschte absolute Einspritzmenge (Drehmoment), sondern lediglich auf einen jeweils zu bestimmenden Durchschnittswert (Mittelwert) möglich. Zur Regelung der jeweiligen Einspritzmenge (Drehmoment) auf einen Durchschnittswert (Mittelwert) wird das Ansteuerintervall beziehungsweise die Ansteuerdauer von Zylindern, denen eine unterdurchschnittliche Einspritzmenge zugeführt wurde beziehungsweise die ein unterdurchschnittliches Drehmoment aufweisen, verlängert, während das Ansteuerintervall beziehungsweise die Ansteuerdauer von Zylindern, in denen eine überdurchschnittliche Einspritzmenge zugeführt wurde (beziehungsweise die ein unterdurchschnittliches Drehmoment aufweisen), verkürzt wird. Das Verlängern beziehungsweise Verkürzen des Ansteuerintervalls beziehungsweise der Ansteuerdauer erfolgt durch Verschieben des Intervallendes (Ansteuerende beziehungsweise Einspritzende) um einen zylinderspezifischen, zur Anpassung der den Zylindern zuzuführenden Einspritzmenge (Drehmoment) an den Durchschnittswert bestimmten Ansteuerintervall-Korrekturwert.

Nachteilhafterweise treten trotz einer in dieser Weise arbeitenden Mengenausgleichsregelung oder Laufruheregelung nur suboptimale Verbrennungsverläufe in wenigstens einem Teil der Zylinder der Brennkraftmaschine auf, wodurch es zu nachteiligen Geräuschbildungen und Erhöhungen des Kraftstoffverbrauchs und insbesondere der Abgasemissionen während des Betriebs der Brennkraftmaschine kommt.

Die EP-A-0 894 965 offenbart ein Verfahren zum Einstellen von zylinderspezifschen Einspritzmengenprofilen an einer Brennkraftmaschine mit folgenden Verfahrensschritten :
Feststellen einer Streuung zwischen während eines Ansteuerintervalls in Zylinder der Brennkraftmaschine zugeführten Einspritzmengen an Kraftstoff,
   und zwar in Bezug auf einen Sollwert und nicht anhand von Drehzahlsignalen;
Bestimmen eines zylinderspezifischen Ansteuerintervall - Korrekturwerts zur Anpassung der in die Zylinder zuzuführenden Einspritzmengen an einen Sollwert und nicht an einen einen Durchschnittswert ;
Verschieben eines Intervallendes des Ansteuerintervalls des jeweiligen Zylinders um den Ansteuerintervall-Korrekturwert, und mit zusätzlichem Verschieben des Intervallbeginns des Ansteuerintervalls zur Optimierung des Einspritzmengenprofils.

### Vorteile der Erfindung

Das gattungsgemäße Verfahren zum Einstellen von zylinderspezifischen Einspritzmengenprofilen an einer Brennkraftmaschine ist erfindungsgemäß durch den Verfahrensschritt gekennzeichnet, dass ein zusätzliches Verschieben des Intervallbeginns des Ansteuerintervalls zur Optimierung des Einspritzmengenprofils vorgesehen ist. Durch das zusätzliche Verschieben des Intervallbeginns des Ansteuerintervalls ist es möglich, die jeweils zylinderspezifisch während einer Ansteuerung (Ansteuerintervall) sich einstellenden Einspritzverläufe beziehungsweise Einspritzmengenprofile einander anzugleichen, so dass für jeden Zylinder während eines Ansteuerintervalls nahezu gleich ausgebildete Einspritzmengenprofile vorliegen. Somit erfolgt durch das Verschieben des Intervallendes des Ansteuerintervalls eine zylinderspezifische Angleichung des Drehmoments an einen Drehmomenten-Durchschnittswert, wobei die jeweils vorliegenden, zylinderspezifischen Einspritzmengenprofile weiterhin unterschiedlich sind beziehungsweise sein können, während mittels zusätzlichen Verschiebens des Intervallbeginns die während eines Ansteuerintervalls sich einstellenden zylinderspezifischen Einspritzmengenprofile einander angeglichen und somit optimiert werden.. Hierdurch wird vorteilhafterweise ermöglicht, dass die Verbrennungsschwerpunkte aller Zylinder der Brennkraftmaschine während eines Ansteuerintervalls bei nahezu dem gleichen Zeitpunkt beziehungsweise Kurbelwinkel liegen. Dies führt insbesondere zu einer Verbesserung hinsichtlich der Geräuschbildung, des Kraftstoffverbrauchs und der Abgasemissionen während des Betriebs der Brennkraftmaschine.

Vorteilhafterweise werden das Intervallende und der Intervallbeginn des Ansteuerinvalls des jeweiligen Zylinders gleichzeitig verschoben. Durch ein gleichzeitiges Einstellen des Intervallendes und des Intervallbeginns wird in besonders schneller und effektiver Weise mittels einer Angleichung eine Verbesserung beziehungsweise Optimierung der zylinderspezifischen Einspritzmengenprofile während des Betriebs der Brennkraftmaschine ermöglicht.

Mit Vorteil wird bei einer unterdurchschnittlichen Einspritzmenge das Ansteuerintervall mit seinem Intervallende auf einen späteren Zeitpunkt und mit seinem Intervallbeginn auf einen früheren Zeitpunkt verschoben. Durch ein derartiges Verschieben des Intervallendes und des Intervallbeginns wird beim Betriebsfall einer unterdurchschnittlichen Einspritzmenge in besonders effektiver und zuverlässiger Weise ein optimiertes, zylinderspezifisches Einspritzmengenprofil erhalten.

Mit Vorteil wird bei einer überdurchschnittlichen Einspritzmenge das Ansteuerintervall mit seinem Intervallende auf einen früheren Zeitpunkt und mit seinem Intervallbeginn auf einen späteren Zeitpunkt verschoben. Auch bei diesem zweiten möglichen Betriebsfall einer nicht durchschnittlichen Einspritzmenge ist es durch die erwähnten Maßnahmen möglich, in zuverlässiger Weise ein verbessertes, zylinderspezifisches Einspritzmengenprofil zu erhalten.

Vorzugsweise erfolgt das Einstellen des Einspritzmengenprofils mittels einer Mengenausgleichsregelung und die Optimierung des Einspritzmengenprofils in Kooperation mit der Mengenausgleichsregelung. Mengenausgleichsregelung oder Laufruheregelung werden bereits zum Einstellen von zylinderspezifischen Einspritzmengenprofilen an Brennkraftmaschinen eingesetzt. Sie sind besonders geeignet, ein zusätzliches Verschieben des Intervallbeginns des Ansteuerintervalls zur Optimierung des Einspritzmengenprofils einzuleiten beziehungsweise zu dessen Einleitung beizutragen. Es ist somit lediglich eine Anpassung einer bereits vorliegenden beziehungsweise sich im Einsatz befindenden Mengenausgleichsregelung notwendig, um eine Verbesserung beziehungsweise Optimierung des Einspritzmengenprofils zu ermöglichen.

Entsprechend einer bevorzugten Ausführungsvariante wird der Intervallbeginn in Abhängigkeit des Ansteuerintervall-Korrekturwerts verschoben. Durch das Herstellen einer Abhängigkeit der Änderung des Intervallbeginns vom jeweils bestimmten Ansteuerintervall-Korrekturwert ist eine besonders zuverlässige und vorzugsweise gleichzeitige Verschiebung des Intervallendes und des Intervallbeginns zur Optimierung des Einspritzmengenprofils möglich.

Mit Vorteil wird der Verschiebewert des Intervallbeginns aus einer Kennlinie oder einer Tabelle ermittelt. Hierdurch wird in steuerungstechnisch besonders einfacher Weise eine Optimierung des Einspritzmengenprofils realisierbar. Dabei können die Verschiebewerte des Intervallbeginns in Abhängigkeit des Ansteuerintervall-Korrekturwerts in Form einer Kennlinie oder einer Tabelle in kontinuierlich abrufbarer Weise abgespeichert werden.

Entsprechend einer alternativen Ausführungsvariante wird der Intervallbeginn mittels eines Online-Korrekturprogramms verschoben. Durch ein Online-Korrekturprogramm ist eine besonders präzise und kontinuierliche Verschiebung des Intervallbeginns zur Optimierung des Einspritzmengenprofils möglich. Dabei ist ein Online-Korrekturprogramm verhältnismäßig einfach mit einer Mengenausgleichsregelung koordinierbar.

Vorzugsweise wird der Verschiebewert des Intervallbeginns aus dem Produkt eines veränderbaren Korrekturfaktors, der größer oder gleich null und kleiner oder gleich eins ist, und des Ansteuerintervall-Korrekturwerts ermittelt. Hierdurch kann der Verschiebewert des Intervallbeginns in besonders effektiver und zuverlässiger Weise in Abhängigkeit des Ansteuerintervall-Korrekturwerts zur Optimierung des Einspritzmengenprofils bestimmt werden.

Mit Vorteil wird der Korrekturfaktor unter Berücksichtigung seines Einflusses auf die Streuung der zylinderspezifischen Einspritzmengen optimiert. Beispielsweise kann bei einer ersten Änderung des Korrekturfaktors eine stärkere Streuung zwischen den während eines Ansteuerintervalls in die Zylinder der Brennkraftmaschine zugeführten Einspritzmengen an Kraftstoff auftreten. In diesem Fall vergrößert sich auch die mittels einer Mengenausgleichsregelung beziehungsweise einer Laufruheregelung festgelegte Korrektureinspritzmenge und somit der Ansteuerintervall-Korrekturwert. Damit ist diese Art der Variation des Korrekturfaktors als nachteilig zu werten. Wird dagegen bei einer zweiten Änderung des Korrekturfaktors der Wert der Korrektureinspritzmenge beziehungsweise der Ansteuerintervall-Korrekturwert kleiner, so hat diese Änderung des Korrekturfaktors vorteilhafterweise zu einer Optimierung des Einspritzmengenprofils geführt.

Vorzugsweise erfolgt die Optimierung des Korrekturfaktors mittels eines Gradientenverfahrens. Ein an sich bekanntes Gradientenverfahren ist in besonders schneller und zuverlässiger Weise geeignet, eine Optimierung des Korrekturfaktors zu gewährleisten.

Weitere vorteilhafte Ausgestaltungen der Erfindung ergeben sich aus der Beschreibung.

### Zeichnungen

Die Erfindung wird nachfolgend in einer Ausführungsvariante anhand zugehöriger Zeichnungen näher erläutert. Es zeigen:
- Figuren 1 bis 3: die Einspritzverläufe zweier Zylinder mit unterdurchschnittlich zugeführter Einspritzmenge in einem Zylinder und mit optimiertem Einspritzmengenprofil;
- Figuren 4 bis 6: die Einspritzverläufe zweier Zylinder mit überdurchschnittlich zugeführter Einspritzmenge in einem Zylinder und mit optimiertem Einspritzmengenprofil und
- Figur 7: ein Blockschaltbild zur Optimierung eines zylinderspezifischen Einspritzmengenprofils.

### Beschreibung der Erfindung

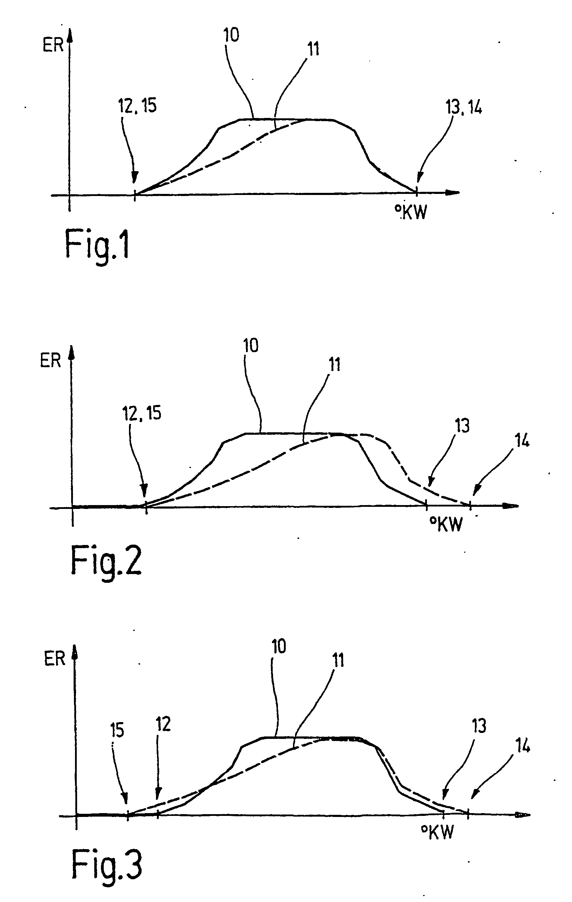

Unter Bezugnahme auf die Figuren 1 bis 3 zeigt die Figur 1 zwei Einspritzverläufe 10, 11 (Haupteinspritzung) unterschiedlicher Zylinder in Form eines Diagramms, gemäß welchem die Einspritzrate ER in Abhängigkeit des Kurbelwinkels KW, welcher als Maß für den Einspritz-Zeitpunkt dient, einer eine Mehrzahl von Zylindern aufweisenden Brennkraftmaschine dargestellt ist. Der Einspritzverlauf 10 eines ersten Zylinders entspricht einer exakt durchschnittlich in den ersten Zylinder zugeführten Einspritzmenge, während der Einspritzverlauf 11 eines zweiten Zylinders einer unterdurchschnittlich in den zweiten Zylinder zugeführten Einspritzmenge entspricht. Die jeweilige, zylinderspezifische Einspritzmenge an Kraftstoff wird während eines Ansteuerintervalls in den entsprechenden Zylinder der Brennkraftmaschine zugeführt. Das Ansteuerintervall für den ersten Zylinder (Einspritzverlauf 10) ist durch einen Ansteuerbeginn 12 und ein Ansteuerende 13 begrenzt, während das Ansteuerintervall für den zweiten Zylinder (Einspritzverlauf 11) durch einen Intervallbeginn 15 und ein Intervallende 14 gekennzeichnet ist. Gemäß Figur 1 ist der Kurbelwinkel-Wert beziehungsweise der Zeitpunkt des Intervallbeginns 12, 15 beziehungsweise des Intervallendes 13, 14 für beide Zylinder gleich groß, so dass die Einspritzung von Kraftstoff in die beiden Zylinder im gleichen Ansteuerintervall erfolgt. Die Einspritzverläufe 10, 11 in Figur 1 unterscheiden sich jedoch in Bezug auf die Einspritzmenge, da die Einspritzmenge des Einspritzverlaufs 10 (erster Zylinder) exakt durchschnittlich und die Einspritzmenge des Einspritzverlaufs 11 (zweiter Zylinder) unterdurchschnittlich ist. Die Einspritzverläufe 10, 11 unterscheiden sich in Figur 1 ferner erheblich voneinander hinsichtlich ihrer Kontur.

Figur 2 zeigt den in Bezug auf Figur 1 unveränderten Einspritzverlauf 10 des ersten Zylinders (durchschnittliche Einspritzmenge) und einen mittels einer Mengenausgleichsregelung (MAR), welche auch als Laufruheregelung (LRR) bekannt ist, hinsichtlich der Einspritzmenge korrigierten Einspritzverlauf 11 des zweiten Zylinders. Die Korrektur der Einspritzmenge für den zweiten Zylinder erfolgt dabei unter Beibehaltung des ursprünglichen Intervallbeginns 15 mittels Verschieben des Intervallendes 14 des Einspritzverlaufs 11 auf einen größeren Kurbelwinkel-Wert und somit auf einen späteren Zeitpunkt. Diese für den zweiten Zylinder (Einspritzverlauf 11) durchgeführte Ansteuerintervall-Korrektur dient somit zur Anpassung der in diesen Zylinder zuzuführenden Einspritzmenge an einen Durchschnittswert, welcher im vorliegenden Fall der Einspritzmenge des Einspritzverlaufs 10 (erster Zylinder, durchschnittliche Einspritzmenge) entspricht. In Figur 2 ist somit mittels der Mengenausgleichsregelung die zunächst unterdurchschnittliche Einspritzmenge des Einspritzverlaufs 11 für den zweiten Zylinder an die durchschnittliche Einspritzmenge des Einspritzverlaufs 10 für den ersten Zylinder durch Verschieben des Intervallendes 14 des Ansteuerintervalls des Einspritzverlaufs 11 auf einen größeren Kurbelwinkel-Wert (späterer Zeitpunkt) angepasst worden. Die Einspritzverläufe 10, 11 unterscheiden sich auch in Figur 2, das heißt nach erfolgter Mengenausgleichsregelung, verhältnismäßig stark voneinander in Bezug auf ihre Kontur.

Figur 3 zeigt den weiterhin unveränderten Einspritzverlauf 10 für den ersten Zylinder und einen hinsichtlich des Einspritzmengenprofils optimierten Einspritzverlauf 11 für den zweiten Zylinder. Zur optimierung des Einspritzmengenprofils des Einspritzverlaufs 11 wurde das Intervallende 14 auf einen größeren Kurbelwinkel-Wert und, vorzugsweise gleichzeitig, der Intervallbeginn 15 auf einen kleineren Kurbelwinkel-Wert verschoben. Aufgrund des Verschiebens sowohl des Intervallendes 14 als auch des Intervallbeginns 15 des Ansteuerintervalls des Einspritzverlaufs 11 für den zweiten Zylinder wird nicht nur die zunächst unterdurchschnittliche Einspritzmenge auf einen Durchschnittswert korrigiert, sondern zusätzlich das entsprechende Einspritzmengenprofil optimiert. Im vorliegenden Fall gemäß Figur 3 ist somit zusätzlich das Einspritzmengenprofil des Einspritzverlaufs 11 an das Einspritzmengenprofil des Einspritzverlaufs 10 angepasst worden.

Eine Optimierung des Einspritzmengenprofils gemäß Figur 3 ist besonders vorteilhaft, da auch bei lediglich hinsichtlich der Einspritzmenge angepassten Einspritzverläufen (Figur 2) auftretende, nicht erwünschte Geräuschbildungen und eine Erhöhung des Kraftstoffverbrauchs und insbesondere der Abgasemissionen während des Betreibens der Brennkraftmaschine vermieden oder wenigstens beschränkt werden.

Ferner wird nachteilhafterweise durch die Vergrößerung des Ansteuerintervalls gemäß Figur 2 (Einspritzverlauf 11), und somit durch die Verlängerung der Ansteuerdauer, eine zusätzliche Einspritzmenge zu einem späten Zeitpunkt, das heißt bei einem großen Kurbelwinkel-Wert nach dem oberen Totpunkt, zugeführt. Diese, zu einem "späten" Kurbelwinkel eingebrachte Einspritzmenge wirkt sich weniger stark auf das Motormoment der Brennkraftmaschine aus als eine entsprechende, zu einem früheren Zeitpunkt eingebrachte Einspritzmenge. Daher ist zu einer Kompensation von bei gemäß Figur 2 ausgebildeten Einspritzmengenprofilen zwangsläufig auftretenden Drehzahl- beziehungsweise Drehmomentschwankungen ohne eine Optimierung des Einspritzmengenprofils eine überproportional große Einspritzmenge notwendig. Dagegen wird mittels einer Optimierung des Einspritzmengenprofils gemäß Figur 3 gewährleistet, dass der Verbrennungsschwerpunkt aller Zylinder der Brennkraftmaschine bei nahezu dem gleichen Kurbelwinkel-Wert und somit dem gleichen Zeitpunkt liegt. Hierzu wird das Einspritzmengenprofil der einzelnen Zylinder derart optimiert, dass das zylinderspezifische Ansteuerintervall beziehungsweise Ansteuerdauer verändert wird mittels Verschieben des Intervallendes als auch des Intervallbeginns des Ansteuerintervalls. Dabei kann das zylinderspezifische Ansteuerintervall bei Vorliegen einer unterdurchschnittlich zugeführten Einspritzmenge verlängert (siehe Figuren 1 bis 3) oder bei überdurchschnittlich zugeführter Einspritzmenge entsprechend verkürzt werden.

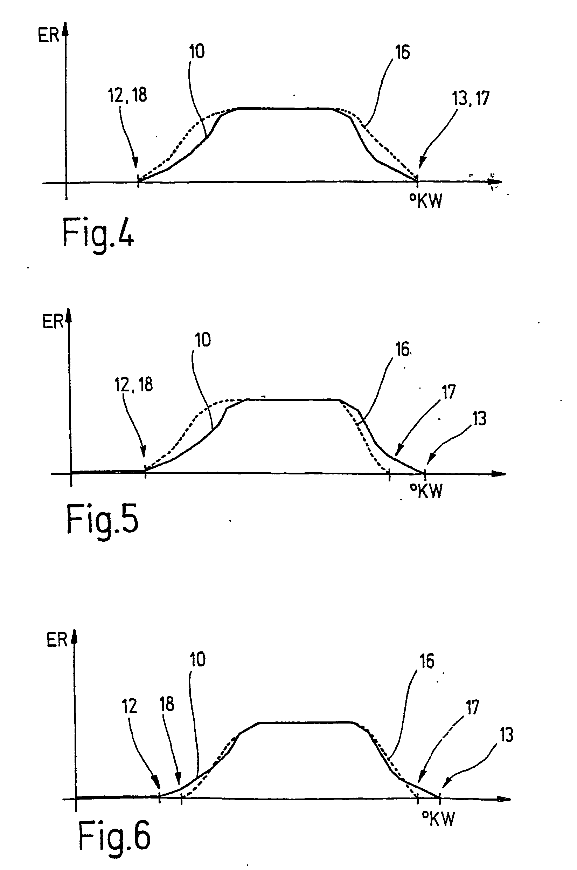

Die Figuren 4 bis 6 beziehen sich auf den oben erwähnten Betriebsfall, bei welchem die in einen Zylinder zugeführte Einspritzmenge überdurchschnittlich ist. Figur 4 zeigt zwei Einspritzverläufe 10, 16 für einen ersten und einen zweiten Zylinder, wobei beim Einspritzverlauf 10 wiederum eine exakt durchschnittliche Einspritzmenge in den ersten Zylinder zugeführt wurde. Entsprechend dem Einspritzverlauf 16 der Figur 4 ist in den zweiten Zylinder eine überdurchschnittliche Einspritzmenge zugeführt worden. Beide Einspritzverläufe 10, 16 weisen einen gemeinsamen Intervallbeginn 12, 18 und ein gemeinsames Intervallende 13, 17 auf, so dass.eine Kraftstoffeinspritzung in den ersten und zweiten Zylinder im gleichen Ansteuerintervall erfolgt ist.

Gemäß Figur 5 ist das Intervallende 17 des Einspritzverlaufs 16 auf einen in Bezug auf Figur 4 kleineren Kurbelwinkel-Wert und somit früheren Zeitpunkt verschoben worden. Der Kurbelwinkel-Wert des Intervallbeginns 18 des Einspritzverlaufs 16 ist dabei unverändert geblieben. In Figur 5 ist somit mittels einer Mengenausgleichsregelung durch Verschieben des Intervallendes 17 des Ansteuerintervalls auf einen kleineren Kurbelwinkel-Wert beziehungsweise früheren Zeitpunkt die zunächst überdurchschnittlich in den zweiten Zylinder zugeführte Einspritzmenge an einen Durchschnittswert angepasst worden. In den ersten und zweiten Zylinder werden somit gemäß Figur 5 die gleiche Menge an Kraftstoff eingespritzt, wobei sich die Einspritzmengenprofile der Einspritzverläufe 10, 16 weiterhin verhältnismäßig stark voneinander unterscheiden.

In Figur 6 ist das Einspritzmengenprofil des Einspritzverlaufs 16 durch Verschieben des Intervallendes 17 und zusätzliches, vorzugsweise gleichzeitiges Verschieben des Intervallbeginns 18 des Ansteuerintervalls optimiert worden. Da es sich bei dem Einspritzverlauf 16 gemäß Figur 4 um eine überdurchschnittliche Einspritzmenge handelt, ist entsprechend Figur 6 das Intervallende 17 auf einen kleineren Kurbelwinkel-Wert beziehungsweise früheren Zeitpunkt und der Intervallbeginn 18 auf einen größeren Kurbelwinkel-Wert beziehungsweise späteren Zeitpunkt verschoben worden.

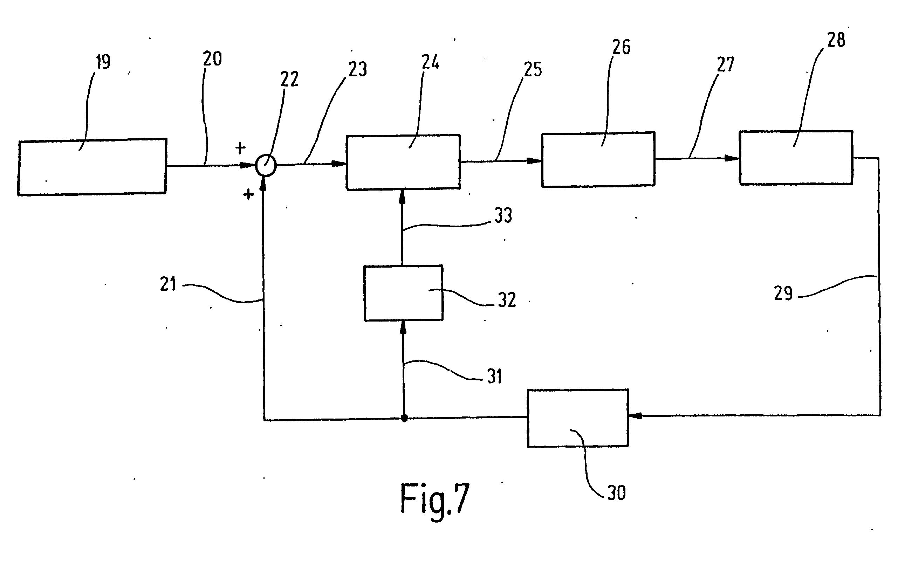

Figur 7 zeigt ein Blockschaltbild zur Optimierung eines zylinderspezifischen Einspritzmengenprofils. Eine Einspritzmengenberechnungseinheit 19 übermittelt mittels einer als Pfeil 20 dargestellten Leitung ein Signal hinsichtlich des Ansteuerintervalls beziehungsweise der Ansteuerdauer an einen Additionspunkt 22. Vom Additionspunkt 22 wird ein Ausgangssignal durch eine als Pfeil 23 dargestellte Leitung an eine Steuereinheit 24 übermittelt, welche ausgangsseitig ein entsprechendes Signal durch eine als Pfeil 25 dargestellte Leitung an einen Injektor 26 sendet. Der Injektor 26 ist mit einem Verbrennungsmotor 28 operativ wirkverbunden (Pfeil 27). Vom Verbrennungsmotor 28 werden geeignete Daten durch eine als Pfeil 29 dargestellte Leitung an eine Einheit 30 zur Mengenausgleichsregelung übertragen. Die Einheit 30 ist geeignet, eine Streuung zwischen während eines Ansteuerintervalls in Zylinder des Verbrennungsmotors 28 zugeführten Einspritzmengen an Kraftstoff festzustellen und einen zylinderspezifischen Ansteuerintervall-Korrekturwert zur Anpassung der in die Zylinder zuzuführenden Einspritzmengen an einen Durchschnittswert zu bestimmen. Die Einheit 30 zur Mengenausgleichsregelung übermittelt ausgangsseitig ein entsprechendes Signal durch die als Pfeil 21 dargestellte Leitung an den Additionspunkt 22 und gleichzeitig mittels einer als Pfeil 31 dargestellten Leitung an eine Einheit 32 zur Optimierung der zylinderspezifischen Einspritzmengenprofile. Am Additionspunkt 22 werden somit das Ausgangssignal der Einspritzmengenberechnungseinheit 19 und das Ausgangssignal der Einheit 30 zur Mengenausgleichsregelung additiv verknüpft und durch die als Pfeil 23 dargestellte Leitung an die Steuereinheit 24 weitergeleitet. Gleichzeitig wird von der Einheit 32 zur Optimierung der zylinderspezifischen Einspritzmengenprofile durch eine als Pfeil 33 dargestellte Leitung ein entsprechendes Signal an die Steuereinheit 24 übermittelt.

Die Einheit 30 zur Mengenausgleichsregelung ermittelt die vorliegenden Einspritzmengendifferenzen an Kraftstoff ΔME(i) der einzelnen Zylinder Z des Verbrennungsmotors 28 und führt eine Umrechnung der jeweiligen Einspritzmengendifferenz ΔME(i) in eine Ansteuerdauerdifferenz ΔAD(i) durch. Dabei entspricht die Ansteuerdauer dem oben erwähnten Ansteuerintervall, so dass die Ansteuerdauerdifferenz ΔAD(i) ein zylinderspezifischer Ansteuerintervall-Korrekturwert ist. Die von der Einheit 30 zur Mengenausgleichsregelung bestimmte Ansteuerdauerdifferenz ΔAD(i) dient zur Anpassung der in die Zylinder zuzuführenden Einspritzmengen an Kraftstoff an einen Durchschnittswert. Es wird somit durch eine Mengenausgleichsregelung die Ansteuerdauer beziehungsweise das zylinderspezifische Ansteuerintervall um den Wert ΔAD(i) verändert, das heißt verlängert oder verkürzt.

Die zylinderspezifisch mittels der Einheit 30 zur Mengenausgleichsregelung bestimmte Ansteuerdauerdifferenz ΔAD(i) wird in der Einheit 32 zur Optimierung des entsprechenden Einspritzmengenprofils mit einem Korrekturfaktor multipliziert, welcher veränderbar ist und einen Wert größer oder gleich null und kleiner oder gleich eins hat. Das Produkt des veränderbaren Korrekturfaktors und der Ansteuerdauerdifferenz ΔAD(i) dient zur Ermittlung mittels der Einheit 32 eines geeigneten Verschiebewerts des Intervallbeginns des entsprechenden Ansteuerintervalls beziehungsweise der Ansteuerdauer. Es erfolgt somit mittels der Einheit 30 zur Mengenausgleichsregelung und der Einheit 32 zur Optimierung der Einspritzmengenprofile gegebenenfalls ein gleichzeitiges Verschieben des Intervallendes und des Intervallbeginns des Ansteuerintervalls beziehungsweise der Ansteuerdauer zur Optimierung des Einspritzmengenprofils.

Ferner ist es möglich, dass die Einheit 32 zur Optimierung der Einspritzmengenprofile zusätzlich mit einem Online-Korrekturprogramm versehen ist, mittels welchem der Korrekturfaktor unter Berücksichtigung seines Einflusses auf die Streuung der zylinderspezifischen Einspritzmengen während eines Ansteuerintervalls beziehungsweise Ansteuerdauer optimiert wird. Das Online-Korrekturprogramm ist geeignet, festzustellen, ob bei einer Variation des Korrekturfaktors der Wert der Ansteuerdauerdifferenz ΔAD(i) sich vergrößert beziehungsweise abnimmt. Eine Vergrößerung der Ansteuerdauerdifferenz ΔAD(i) bedeutet, dass die Änderung des Intervallbeginns nachteilhafterweise zu einer Verringerung des Motormoments des Verbrennungsmotors 28 geführt hat, während eine Verringerung der Ansteuerdauerdifferenz ΔAD(i) bedeutet, dass die Verschiebung des Intervallbeginns eine Vergrößerung des Motormoments verursacht hat. Im letztgenannten Fall wird somit die gleiche Einspritzmenge an Kraftstoff aufgrund der Optimierung des Korrekturfaktors effektiver benutzt.

Die sich beim Betreiben des Verbrennungsmotors 28 jeweils einstellende Ansteuerdauerdifferenz ΔAD(i) dient somit als Gütekriterium zur Optimierung des Korrekturfaktors mittels der Einheit 32. Hierbei kann die Optimierung des Korrekturfaktors prinzipiell mittels eines an sich bekannten Gradientenverfahrens erfolgen.

## Patentansprüche

1. Verfahren zum Einstellen von zylinderspezifischen Einspritzmengenprofilen an einer Brennkraftmaschine mit folgenden Verfahrensschritten:
- Feststellen einer Streuung zwischen während eines Ansteuerintervalls in Zylinder der Brennkraftmaschine zugeführten Einspritzmengen an Kraftstoff anhand eines Drehzahlsignals;
- Bestimmen eines zylinderspezifischen Ansteuerintervall-Korrekturwerts zur Anpassung der in die Zylinder zuzuführenden Einspritzmengen an einen Durchschnittswert;
- Verschieben eines Intervallendes des Ansteuerintervalls des jeweiligen Zylinders um den Ansteuerintervall-Korrekturwert;
**gekennzeichnet durch** den Verfahrensschritt:
- zusätzliches Verschieben des Intervallbeginns (15, 18) des Ansteuerintervalls zur Optimierung des Einspritzmengenprofils.

2. Verfahren nach Anspruch 1, **dadurch gekennzeichnet, dass** das Intervallende (14, 17) und der Intervallbeginn (15, 18) des Ansteuerintervalls des jeweiligen Zylinders gleichzeitig verschoben werden.

3. Verfahren nach einem der vorhergehenden Ansprüche, **dadurch gekennzeichnet, dass** bei einer unterdurchschnittlichen Einspritzmenge das Ansteuerintervall mit seinem Intervallende (14) auf einen späteren Zeitpunkt und mit seinem Intervallbeginn (15) auf einen früheren Zeitpunkt verschoben wird.

4. Verfahren nach einem der vorhergehenden Ansprüche, **dadurch gekennzeichnet, dass** bei einer überdurchschnittlichen Einspritzmenge das Ansteuerintervall mit seinem Intervallende (17) auf einen früheren Zeitpunkt und mit seinem Intervallbeginn (18) einen späteren Zeitpunkt verschoben wird.

5. Verfahren nach einem der vorhergehenden Ansprüche, **dadurch gekennzeichnet, dass** das Einstellen des Einspritzmengenprofils mittels einer mengenausgleichsregelung und die Optimierung des Einspritzmengenprofils in Kooperation mit der Mengenausgleichsregelung erfolgt.

6. Verfahren nach einem der vorhergehenden Ansprüche, **dadurch gekennzeichnet, dass** der Intervallbeginn (15, 18) in Abhängigkeit des Ansteuerintervall-Korrekturwerts verschoben wird.

7. verfahren nach einem der vorhergehenden Ansprüche, **dadurch gekennzeichnet, dass** der Verschiebewert des Intervallbeginns (15, 18) aus einer Kennlinie oder einer Tabelle ermittelt wird.

8. Verfahren nach einem der vorhergehenden Ansprüche, **dadurch gekennzeichnet, dass** der Intervallbeginn (15, 18) mittels eines Online-Korrekturprogramms verschoben wird.

9. Verfahren nach einem der vorhergehenden Ansprüche, **dadurch gekennzeichnet, dass** der Verschiebewert des Intervallbeginns (15, 18) aus dem Produkt eines veränderbaren Korrekturfaktors, der größer gleich null oder kleiner gleich 1 ist, und des Ansteuerintervall-Korrekturwerts ermittelt wird.

10. Verfahren nach einem der vorhergehenden Ansprüche, **dadurch gekennzeichnet, dass** der Korrekturfaktor unter Berücksichtigung seines Einflusses auf die Streuung der zylinderspezifischen Eispritzmengen optimiert wird.

11. Verfahren nach einem der vorhergehenden Ansprüche, **dadurch gekennzeichnet, dass** die Optimierung des Korrekturfaktors mittels eines Gradientenverfahrens erfolgt.

## Claims

1. Method for adjusting cylinder-specific injection quantity profiles in an internal combustion engine, having the following method steps:
- determination of variation between injection quantities of fuel supplied to cylinders of the internal combustion engine during an actuation interval, by reference to a rotational speed signal;
- setting of a cylinder-specific actuation interval correction value for adapting the injection quantities to be supplied to the cylinders to an average value;
- displacement of an end of interval of the actuation interval of the respective cylinder by the actuation interval correction value;
**characterized by** the method step:
- additional displacement of the start (15, 18) of the actuation interval in order to optimize the injection quantity profile.

2. Method according to Claim 1, **characterized in that** the end (14, 17) of the actuation interval and the start (15, 18) of the actuation interval of the respective cylinder are displaced simultaneously.

3. Method according to one of the preceding claims, **characterized in that** when there is less than average injection quantity, the end (14) of the actuation interval is displaced to a later time, and the start (15) of the interval is displaced to an earlier time.

4. Method according to one of the preceding claims, **characterized in that** when there is an above average injection quantity, the end (17) of the actuation interval is displaced to an earlier time and the start (18) of the interval is displaced to a later time.

5. Method as claimed in one of the preceding claims, **characterized in that** the injection quantity profile is set by means of a quantity-compensating controller and the optimization of the injection quantity profile is carried out in cooperation with the quantity-compensating controller.

6. Method according to one of the preceding claims, **characterized in that** the start (15, 18) of the interval is displaced as a function of the actuation interval correction value.

7. Method according to one of the preceding claims, **characterized in that** the displacement value of the start (15, 18) of the interval is determined from a characteristic curve or a table.

8. Method according to one of the preceding claims, **characterized in that** the start (15, 18) of the interval is displaced by means of an online correction program.

9. Method according to one of the preceding claims, **characterized in that** the displacement value of the start (15, 18) of the interval is determined from the product of a variable correction factor which is greater than or equal to zero or less than or equal to 1, and the actuation interval correction value.

10. Method according to one of the preceding claims, **characterized in that** the correction factor is optimized to the variation of the cylinder-specific injection quantities taking into account its influence.

11. Method according to one of the preceding claims, **characterized in that** the correction factor is optimized by means of a gradient method.

## Revendications

1. Procédé pour ajuster des profils de débit d'injection spécifiques aux cylindres d'un moteur à combustion interne, présentant les étapes suivantes :
- détermination, à l'aide d'un signal de vitesse de rotation, d'une dispersion entre les débits injectés dans les cylindres du moteur pendant un intervalle de commande,
- détermination d'une valeur de correction de l'intervalle de commande spécifique aux cylindres, pour ajuster, sur une valeur moyenne, les débits injectés dans les cylindres,
- faire glisser une fin de l'intervalle de commande de chaque cylindre, de la valeur de correction de l'intervalle de commande,
**caractérisé par** l'étape suivante,
- glissement supplémentaire du début (15, 18) de l'intervalle de commande pour optimiser le profil de débit d'injection.

2. Procédé selon la revendication 1,
**caractérisé en ce que**
la fin (14, 17) et le début (15, 18) de l'intervalle de commande de chaque cylindre sont déplacés en même temps.

3. Procédé selon la revendication 1 ou 2,
**caractérisé en ce que**
dans le cas d'un débit d'injection inférieur à la moyenne, l'intervalle de commande est déplacé en retardant sa fin (14) et en avançant son début (15).

4. Procédé selon une des revendications précédentes,
**caractérisé en ce que**
dans le cas d'un débit d'injection supérieur à la moyenne, l'intervalle de commande est déplacé en avançant sa fin (17), et en retardant son début (18).

5. Procédé selon une des revendications précédentes,
**caractérisé en ce que**
le réglage du profil de débit d'injection est assuré par une régulation d'équilibrage de débit, et l'optimisation du profil est obtenue en coopération avec cette régulation.

6. Procédé selon une des revendications précédentes,
**caractérisé en ce que**
le début d'intervalle (15, 18) est déplacé en fonction de la valeur de correction de l'intervalle de commande.

7. Procédé selon une des revendications précédentes,
**caractérisé en ce que**
la valeur du déplacement du début d'intervalle (15, 18) est établie à partir d'une caractéristique ou d'un tableau.

8. Procédé selon une des revendications précédentes,
**caractérisé en ce que**
le début d'intervalle (15, 18) est déplacé au moyen d'un programme de correction online.

9. Procédé selon une des revendications précédentes,
**caractérisé en ce que**
la valeur du déplacement du début d'intervalle (15, 18) est définie par le produit d'un facteur de correction variable qui est positif et inférieur à 1, et de la valeur de correction de l'intervalle de commande.

10. Procédé selon une des revendications précédentes,
**caractérisé en ce que**
le facteur de correction est optimisé en prenant en compte son influence sur la dispersion des débits injectés spécifiques aux cylindres.

11. Procédé selon une des revendications précédentes,
**caractérisé en ce que**
l'optimisation du facteur de correction s'effectue par un processus à gradients.
